# EUROPEAN PATENT SPECIFICATION

(11) **EP 2 553 020 B1**
(45) Date of publication and mention of the grant of the patent: **22.10.2014**
(21) Application number: 11766421.9
(22) Date of filing: 28.03.2011
(51) Int. Cl.: C08L 77/00, C08K 5/5313, C09K 21/12, C08J 5/00

(54) **FLAME RESISTANT POLYAMIDE RESIN COMPOSITION AND ARTICLES COMRPISING THE SAME**
FLAMMHEMMENDE POLYAMIDHARZZUSAMMENSETZUNG UND ARTIKEL DAMIT
COMPOSITION DE RÉSINE POLYAMIDE IGNIFUGE ET ARTICLES LA CONTENANT

(30) Priority: 30.03.2010 CN 201010139970
(43) Date of publication of application: 06.02.2013
(73) Proprietor: E.I. Du Pont De Nemours and Company, Wilmington, Delaware 19898 (US)
(72) Inventor: ZHANG, Wei, W., Shanghai 201 203 (CN); SUN, Nanjian, Shanghai 201 206 (CN)
(74) Representative: Dannenberger, Oliver Andre
(86) International application number: PCT/US2011/030146
(87) International publication number: WO 2011/126794

(56) References cited:
- EP-A1- 2 080 788
- WO-A1-2005/012430
- US-A1- 2005 014 874
- US-A1- 2008 132 633
- US-B2- 6 956 081
- US-B2- 7 294 661

## Description

### Field of the Invention

The present disclosure relates to a flame resistant polyamide resin composition which exhibits both good surface appearance and high gloss retention after being exposed to high temperature and humidity environment.

### Background of the Invention

Portable electronic devices, such as mobile telephones, personal digital assistants, laptop computers, tablet computers, global positioning system receivers, portable games, radios, cameras and camera accessories, and the like are becoming increasingly widely used globally in many different environments. It is often important that the housings of such devices be made from materials that are able to withstand the rigors of frequent use and can meet challenging aesthetic demands while not interfering with their intended operability. For example, it is desirable that such housing materials have good stiffness and impact resistance and that they exhibit low warpage, high dimensional stability, good surface appearance, and good flame retardancy. In addition, as those portable electronic devices may be used at high temperature and high humidity environment, it is still desirable that the housing materials exhibit high gloss retention under such conditions.

Polyamide resins have been used as housing materials for portable electronic devices because of their good physical properties.

For example, U.S. Patent Publication No. 2008/0132633 discloses a polyamide resin composition comprising fibrous reinforcing agents having non-circular cross sections, which exhibits low warpage. By "warpage" is meant the deformation of molded parts in one or more direction that may be caused by anisotropic shrinkage of the resin during molding.

U.S. Provisional Patent Application No. 61/164,572 discloses a polyamide resin composition containing semi-crystalline polyamide, amorphous polyamide, non-halogenated flame retardant, zinc borate, and fillers, which exhibits high stiffness and hardness, low warpage, and good external appearance.

U.S. Patent Publication No. 2008/0167415 describes reinforced polyamide molding materials with high notched impact strength, comprising an aliphatic semi-crystalline polyamide, an amorphous polyamide and fibrous reinforcing agents having non-circular cross sections.

However, it is found that none of the pnor polyamide resin compositions exhibits good surface appearance, acceptable flame retardancy, as well as high gloss retention under high temperature and humidity conditions

### Summary of the Invention

Provided here is a polyamide resin composition comprising a polyamide resin at least one flame retardant, and at least one reinforcing agent, wherein, (a) the polyamide resin comprises at least one aliphatic polyamide and an aromatic polyamide blend comprising at least one semi-crystalline semi-aromatic polyamide and at least one amorphous semi-aromatic polyamide; (b) based on the total weight of the polyamide resin, 35 to 70 wt% of the at least one aliphatic polyamide and 30 to 65 wt% of the aromatic polyamide blend are present in the polyamide resin and (c) based on the total weight of the aromatic polyamide blend 15 to 80 wt% of the at least one semi-crystalline semi-aromatic polyamide and 20 to 85 wt% of the at least one amorphous semi-aromatic polyamide are present in the aromatic polyamide blend Or, based on the total weight of the polyamide resin, 40 to 70 wt%, or preferably 45 to 65 wt% of the at least one aliphatic polyamide and 30 to 60 wt%, or preferably 35 to 55 wt% of the aromatic polyamide blend are present in the polyamide resin, and based on the total weight of the aromatic polyamide blend, 20 to 70 wt% or preferably 20 to 60 wt% of the at least one semi-crystalline semi-aromatic polyamide and 30 to 80 wt%, or preferably 40 to 80 wt% of the at least one amorphous semi-aromatic polyamide are present in the aromatic polyamide blend

The at least one aliphatic polyamide used herein may be selected from the group consisting of polyamide 6, polyamide 6,6; polyamide 4 6; polyamide 6,10; polyamide 6,12 polyamide 11, polyamide 12, polyamide 9, 10; polyamide 9,12; polyamide 9,13; polyamide 9,14; polyamide 9,15; polyamide 6,16; polyamide 9,36; polyamide 10,10; polyamide 10,12; polyamide 10,13 polyamide 10,14, polyamide 12,10; polyamide 12,12, polyamide 12,13, polyamide 12,14, polyamide 6,14; polyamide 6,13; polyamide 6,15; polyamide 6,16; polyamide 6,13; and combination of two or more thereof

The at least one semi-crystalline semi-aromatic polyamide used here may be selected from the group consisting of polyamide MXD,6; polyamide 12 T; polyamide 10,T; polyamide 9.T; polyamide 6,T/6,6; polyamide 6,T/6,I; polyamide 6,T/D,T; polyamide 6,6/6,T/6,I; polyamide 6/6,T; and combination of two or more thereof

The at least one amorphous semi-aromatic polyamide used here may be selected from the group consisting of polyamide 6,I/6,T; polyamide 6,I; polyamide MXD,I/6,I; polyamide MXD,I/MXD,T/6,I/6,T; polyamide MXD,I/12,I; polyamide MXD,I; polyamide MACM,I/12; polyamide MACM,I/MACM,T/12; polyamide 6.I/MACM,I/12; polyamide 6,I/6,T/MACM,I/MACM,T; polyamide 6,I/6,T/MACM,I/MACM, T/12; polyamide MACM,I/MACM 12, and combination of two or more thereof.

In one embodiment, the at least one aliphatic polyamide comprised in the polyamide resin composition comprises polyamide 6,6; the at least one semi-crystalline semi-aromatic polyamide comprised in the polyamide resin composition comprises polyamide 6,T/6,6; and the at least one amorphous semi-aromatic polyamide present in the polyamide resin composition comprises polyamide 6,I/6,T

In a further embodiment the at least one flame retardant comprised in the polyamide resin composition is present in the polyamide resin composition at a level of 5 to 45 wt% relative to the weight of the polyamide resin. Preferably, the at least one flame retardant is halogen-free Or preferably the at least one halogen-free flame retardant comprises at least one selected from phosphinates of the formula (I) disphosphinates of the formule (II), and combinations or polymers thereof 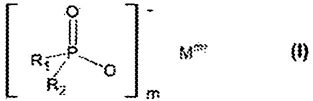 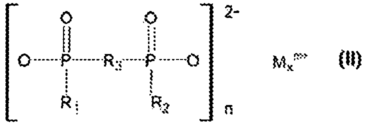 wherein R₃ and R₂ are identical or different and each of R₁ and R₂ is a linear or branched C₁-C₆ alkyl group or an aryl group, R₃ is a linear or branched C₁-C₁₀ alkylene group, a C₆-C₁₀ arylene group an alkyl-arylene group or an aryl-alkylene group, M is selected from calcium ions, magnesium ions, aluminum ions zinc ions, and combinations thereof, m is an integer of 2 or 3, n is an integer of 1 or 3; and x is an integer of 1 or 2 And the at least one flame retardant may further comprise one or more selected from the group consisting of condensation products of melamine, reaction products of melamine with phosphoric acid reaction products of condensation products of melamine with phosphone acid, and combinations of two or more thereof

In a yet further embodiment, the at least one reinforcing agent is present in the polyamide resin composition at a level of 20 to 60 wt%, based on the total weight of the polyamide resin composition The at least one reinforcing agent may be selected from the group consisting of organic fillers, inorganic fillers, and mixtures thereof and the inorganic fillers may be selected from the group consisting of glass fibers, carbon fibers, whiskers of wollastonite, whiskers of potassium titanate, montmorillonite talc, mica, calcium carbonate, silica, clay, kaolin, glass powder, glass beads, and mixtures of two or more thereof Preferably, the at least one reinforcing agent may comprise glass fibers, preferably glass fibers with non-circular cross sections, and wherein the at least one reinforcing agent is present in the polyamide resin composition at a level of 35 to 60 wt%, or preferably 40 to 55 wt%, based on the total weight of the polyamide resin composition.

In a yet further embodiment, the polyamide resin composition may further comprises one or more other additives selected from the group consisting of flame retardant synergists zinc borate other polymers impact modifiers, ultraviolet light stabilizers, heat stabilizers, antioxidants, flow enhancers, processing aids, lubricants, colorants, and combinations of two or more thereof.

Further provided here is an article comprising the polyamide resin composition descnbed above, The article is a molded article and the molded article may be a housing part for a portable electronic device And the portable electronic device may be selected from the group consisting of mobile telephones, personal digital assistants, laptop computers, tablet computers, global positioning system receivers, portable games, radios and cameras and camera accessories

### Detailed Description of the Invention

Disclosed herein is a polyamide resin composition comprising a polyamide resin, at least one flame retardant, and at least one reinforcing agent, wherein the polyamide resin comprises at least one aliphatic polyamide and an aromatic polyamide blend comprising at least one semi-crystalline semi-aromatic polyamide and at least one amorphous semi-aromatic polyamide 35 to 70 wt% of the aliphatic polyamide and 30 to 65 of the aromatic polyamide blend, based on the total weight of the polyamide resin, may be present in the polyamide resin, while the aromatic polyamide blend comprises 15 to 80 wt% of the at least one semi-crystalline semi-aromatic polyamide and 20 to 85 wt% of the at least one amorphous semi-aromatic polyamide, based on the total weight of the aromatic polyamide blend

The aliphatic polyamide used here refers to a polyamide containing no aromatic nng in the molecular chain, which is a polyamide wherein an aminocarboxylic acid, a lactam, or a diamine and a dicarboxylic acid are used as main starting materia(s).

The aminocarboxylic acids used here may be aminocarboxylic acids having 6 to 12 carbon atoms, which include, but are not limited to 6-aminocapronic acid 7-aminoheptanoic acid, 9-aminononanoic acid, 11-aminoundecanoic acid, 12-aminododecanoic acid.

The lactam used here may be lactams having 4 to 12 carbon atoms which include, but are not limited to, α-pyrrolidone, ε-caprolactam, ω-taurolactam, ε-enantholactam.

The diamine used here may be aliphatic or alicyclic diamines including but not limited to, tetramethytenediamme, hexamethylenediamme, 2-methylpentamethylenediamine, nonamethylenediamine, undecamethylenediamine, dodeca-methylenediamine, 2,2 4-trimethylhexamethylenediamme 2,4,4-trimethylhexamethylenedtamfne, 5-methylnonamethylene-diamine, 1,3-bis(aminomethyl)cyclohexane 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane 2,2-bis(4-aminocyclohexyl)propane, bis(aminopropyl)piperazine, aminoethylpiperazine, bis(p-aminocyclohexyl)methane; 2-methyloctamethylenediamine; trimethylhexamethylenediamme, 1,8-diaminooctane: 1,9-diaminononane; 1,10-diaminodecane; 1,12-diaminododecane; and *m-*xylylenediamine.

The dicarboxylic acid used here may be aliphatic or alicyclic dicarboxylic acids, including but not limited to, adipic acid, glutaric acid, pimelic acid, subenc acid, azelaic acid, sebacic acid dodecanedioic acid, 1,4-cyclohexanedicarboxylic acid.

Examples of preferred aliphatic polyamides include, but are not limited to, polyamide 6; polyamides 6,6; polyamide 4,6, polyamide 6,10;polyamide 6,12; polyamide 11, polyamide 12, polyamide 9,10; polyamide 9,12, polyamide 9,13; polyamide 9,14; polyamide 9,15; polyamide 6,16; polyamide 9,36; polyamide 10,10; polyamide 10,12, polyamide 10,13; polyamide 10,14; polyamide 12,10; polyamide 12,12, polyamide 12,13; polyamide 12,14; polyamide 6,14; polyamide 6,13; polyamide 6,15; polyamide 6,16; and polyamide 6,13. In one embodiment, the at least one aliphatic polyamide comprised in the polyamide resin is polyamide 6,6.

The semi-aromatic polyamides used herein include homopolymers, copolymers, terpolymers, or higher polymers containing at least one aromatic monomer component. For example, a semi-aromatic polyamide may be obtained by using an aliphatic dicarboxylic acid and an aromatic diamine, or an aromatic dicarboxylic acid and an aliphatic diamine as starting materials and subjecting them to polycondensation. The aliphatic diamine and aliphatic dicarboxylic acid used in the above mentioned aliphatic polyamide may be used here Suitable aromatic diamines may include but are not limited to, m-xylylenediamtne p-xylylenediamine. Suitable aromatic dicarboxylic acids may include, but are not limited to, naphthalenedicarboxylic acid, terephthalic acid isophthalic acid phthalic acid.

The term "semi-crystalline" used here means that heat of crystal melting measure on a differential scanning calorimeter (DSC) is at least about 5 cal/g. The semi-crystalline semi-aromatic polyamide may be a polyamide containing at least one aromatic monomer component Examples of preferred semi-crystalline semi-aromatic polyamides include, but are not limited to, poly(m-xylylene adipamide) (polyamide MXD 6), poly(dodecamethylene terephthalamide) (polyamides 12,T), poly(decamethylene terephthalamide) (polyamide 10,T), poly(nonamethylene terephthalamide) (polyamide 9,T) hexamethylene adipamide/hexamethylene terephthalamide copolyamide (polyamide 6,T/6,6) poly(hexamethylene terephthalamide/hexamethylene isophthalamide) (polyamide 6,T/6,I) (e g , polyamide 6,T/6,I having at least 55 mol% of its repeating units derived from 6,T), hexa methylene terephthalamide/2-methylpentamethylene terephthalamide copolyamide (polyamide 6,T/D,T); hexamethylene adipamide/hexamethylene terephthalamide/hexamethylene isophthalamide copolyamide (polyamide 6,6/6,T/6,I); poly(caprolactam-hexamethylene terephthalamide) (polyamide 6/6,T). In one embodiment, the semi-crystalline semi-aromatic polyamide used herein is polyamide 6,T/6 6

The term "amorphous" herein means that heat of crystal melting measured on DSC is about 1 cal/g or less The amorphous semi-aromatic polyamide used herein may be a polyamide containing at least two aromatic monomer components Examples of preferred amorphous semi-aromatic polyamides include but are not limited to, poly(hexamethylene isophthalamide/hexamethylene terephthalamide) (polyamide 6,I/6,T) (e g., polyamide 6,I/6 T having at least 55 mol% of its repeating units denved from 6,I), poly(hexamethylene isophthalamide) (polyamide 6,I), poly(metaxylylene isophthalamide/ hexamethylene isophthalamide) (polyamide MXD,I/6,I), poly(metaxylylene isophthalamide/ metaxylylene terephthalamide/ hexamethylene isophthalamide) (polyamide MXD,I/MXD T/6,I/6,T), poly(metaxylylene isophthalamide/dodecamethylene isophthalamide) (polyamide MXD,I/12,I), poly(metaxylylene isophthalamide) (polyamide MXD,I), poly(dimethyldiaminodicyclohexylmethane isophthalamide/dodecanamide) (polyamide MACM,I/12), poly(dimethyldiaminodicyclohexylmethane isophthalamide/ dimethyldiaminodicyclohexylmethane terephthalamide/dodecanamide) (polyamide MACM,I/MACM,T/12), poly(hexamethylene isophthalamide/ dimethyldiaminodicyclohexylmethane isophthalamide/dodecanamide) (polyamide 6,I/MACM,I/12), poly(hexamethylene isophthalamide/hexamethylene terephthalamide/ dimethyldiaminodicyclohexylmethane isophthalamid/ dimethyldiaminodicyclohexylmethane terephthalamide) (polyamide 6,I/6,T/MACM,I/MACM,T), poly(hexamethylene isophthalamide/hexamethylene terephthalamide/ dimethyldiaminodicyclohexylmethane isophthalamid/ dimethyldiaminodicyclohexylmethane terephthalamide/dodecanamide) (polyamide 6,I/6,T/MACM,I/MACM,T/12), poly(dimethyldiaminodicyclohexylmethane isophthalamide/ dimethyldiaminodicyclohexylmethane dodecanamide) (polyamide MACM,I/MACM,12). In one embodiment the amorphous semi-aromatic polyamide used herein is polyamide 6,I/6,T. For example, the polyamide 6,I/6,T used here may contain at least 60 mol%, or preferably at least 65 mol% of its repeating units derived from 6,I.

Based on the total weight of the polyamide resin, the at least one aliphatic polyamide is present in the polyamide resin at a level of 35 to 70 wt%, preferably 40 to 70 wt%, more preferably 45 to 65 wt%. Based on the total weight of the polyamide resin the aromatic polyamide blend is present in the polyamide resin at a level of 30 to 65 wt%, preferably 30 to 60 wt%, more preferably 35 to 55 wt% Based on the total weight of the aromatic polyamide blend, the at least one semi-crystalline semi-aromatic polyamide is present in the blend at a level of 15 to 80 wt%, preferably 20 to 70 wt%, more preferably 20 to 60 wt%, and the at least one amorphous semi-aromatic polyamide may be present in the blend at a level of 20 to 85wt%, preferably 30 to 80 wt%, more preferably 40 to 80 wt%.

The at least one flame retardant may be any suitable flame retardant, including both halogen-containing and halogen-free compounds However due to toxicity concerns in addition to other disadvantages halogen-free flame retardants are preferred.

Suitable halogen-free flame retardants include, but are not limited to red phosphorus (see e g., DE 1 931 387), magnesium hydroxide (see e g., DE 195 25 873), nitrogen-containing flame retardants (such as melamine cyanurate, see e.g EP 0 614 933), phosphorus/nitrogen-containing flame retardants (such as melaminepolyphosphate, see e.g., EP 0 782 599), phosphorus compounds (such as salts of phosphinic or diphosphinic acids, see e.g., EP 0 792 912 and US 2007/0072970), and mixtures of two of more thereof.

In one embodiment, the at least one flame retardant comprises at least one selected from phosphinates of the formula (I), disphosphinates of the formula (II), and combinations or polymers thereof 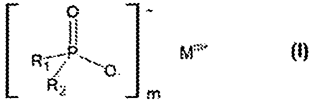 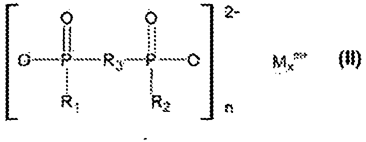 wherein R₁ and R₂ may be identical or different and each of R₁ and R₂ is a linear or branched C₁-C₆ alkyl group or an aryl group; R₃ is a linear or branched C₁-C₁₀ alkylene group, a C₆-C₁₀ arylene group, an alkyl-arylene group, or an aryl-alkylene group; M selected from calcium ions, magnesium ions, aluminum ions, zinc ions and combinations thereof; m is an integer of 2 or 3; n is an integer of 1 or 3; and x is an integer of 1 or 2. Preferably, R₁ and R₂ may be independently selected from methyl, ethyl, *n*-propyl, isopropyl, *n*-butyl, *tert*-butyl, *n*-pentyl, and phenyl; R₃ may be selected from methylene, ethylene, *n*-propylene, isopropylene, *n*-butylene, *tert*-butylene, *n-*pentylene, *n*-octylene, *n*-dodecylene, phenylene, naphthylene, methylphenylene, ethylphenylene, *tert*-butylphenylene, methylnaphthylene, ethylnaphthylene, *tert-*butylnaphthylene, phenylmethylene, phenylethylene, phenylpropylene, and phenylbutylene; and M may be selected from aluminum and zinc ions. More preferably, the phosphinates used here may be selected from aluminum methylethylphosphinate, aluminum diethylphosphinate, and combinations thereof. In addition to the phosphinates, the at least one flame retardant may further comprise one or more selected from condensation products of melamine, reaction products of melamine with phosphoric acid, reaction products of condensation products of melamine with phosphoric acid, and combinations of two or more thereof. Such flame retardants are disclosed in U.S. Patent 6.255,371.

In the polyamide resin composition, the at least one flame retardant may be present at a level of 5 to 45 wt% relative to the weight of the polyamide resin

The polyamide resin composition may further comprise one or more flame retardant synergists Exemplary flame retardant synergists include but are not limited to, silicone, metal oxides (such as silica, boehmite aluminum oxide, iron oxide, titanium oxide, manganese oxide, magnesium oxide, zirconium oxide, zinc oxide, molybdenum oxide, cobalt oxide bismuth oxide, chromium oxide tin oxide, antimony oxide, nickel oxide copper oxide and tungsten oxide) metal powder (such as aluminum, iron, titanium manganese zinc, molybdenum, cobalt bismuth, chromium, tin, antimony, nickel, copper and tungsten), and metal salts (such as barium metaborate, zinc carbonate magnesium carbonate, calcium carbonate and barium carbonate) Preferred flame retardant synergists are boehmite (aluminum hydroxide oxide (AlO(OH))) and/or aluminum oxide When used the one or more flame retardant synergists are present at 1 to 20 wt%, based on the combined weight of the at least one flame retardant and the at least one flame retardant synergist

Based on the total weight cf the polyamide resin composition, the at least one reinforcing agent may be present at a level of 20 to 60 wt%, preferably 35 to 60 wt%, more preferably 40 to 55 wt%. Suitable reinforcing agents may be selected from fibrous inorganic materials (such as glass fibers carbon fibers, and whiskers of wollastonite and potassium titanate), inorganic fillers (such as various montmorillonite, talc, mica, calcium carbonate, silica, clay, kaolin, glass powder, and glass beads), organic fibers (such as various organic or polymeric powders), and mixtures of two or more thereof. In one embodiment of tne disclosed polyamide resin composition, the at least one reinforcing agent is selected from glass fibers. Preferably, the glass fibers used here have non-circular cross sections.

The glass fiber having a non-circular cross section refers to a glass fiber having a major axis lying perpendicular to a longitudinal direction of the fiber and corresponding to the longest linear distance in the cross section The non-circular cross section also has a minor axis corresponding to the longest linear distance in the cross section in a direction perpendicular to the major axis. The non-circular cross section of the fiber may have a variety of shapes including a cocoon-type shape a rectangular shape an elliptical shape, a semielliptical shape, a roughly triangular shape, a polygonal shape an oblong shape. As will be understood by those skilled in the art, the cross section may have other shapes The ratio of the length of the major axis to that of the minor access is preferably between 1.5:1 and 6 1 The ratio is more preferably between 2:1 and 5.1 and yet more preferably between 3:1 to 4:1. Suitable glass fibers having non-circular cross sections are disclosed in EP 0 190 001 and EP 0 196 194 The glass fibers may be in the form of long glass fibers, chopped strands milled short glass fibers, or other suitable forms known to those skilled in the art

The polyamide resin composition may yet further compnse zinc borate By the term "zinc borate" is meant one or more compounds having the formula:

(ZnO)ₓ(B₂O₃)_{y}(H₂0)_{z}

wherein X is an integer between 2 and 4, inclusive; Y is an integer between 1 and 3, inclusive; and Z is an integer between 0 and 5, inclusive Zinc borate can be purchased from US Borax under the tradename Firebrake^{®} Preferred forms of zinc borate are those in which X = 4, Y = 1, and Z = 1 (Firebrake^{®}415); in which X = 2, Y = 3, and Z = 3 5 (Firebrake^{®}290); and in which X = 2, Y = 3. and Z = 0 (Firebrake^{®}500).

The zinc borate may be present at a level of 0.5 to 5 wt%, or preferably 1 to 4 wt%, or more preferably 1.2 to 3.7 wt%, relative to the weight of the at least one flame retardant For the purposes of determining the amount of zinc borate present, if the zinc borate is a hydrate (i.e , Z is not zero), the weight of the corresponding anhydrous form of the zinc borate is used thus only the amounts of ZnO and B₂O₃ present in the zinc borate compound are considered to contribute to the zinc borate weight that is used in the calculation As used herein in conjunction with the amount of zinc borate used in a composition, the term "zinc borate" refers to anhydrous form of the compound in question

The polyamide resin composition may optionally further comprise other additional additives such as other polymers, impact modifiers, ultraviolet light stabilizers, heat stabilizers, antioxidants, flow enhancers, processing aids, lubricants, colorants (including dyes, pigments, carbon black), and combinations of two or more thereof.

The polyamide resin composition disclosed here may be prepared by melt-blending the components using any known methods The component materials may be mixed to uniformity using a melt-mixer such as a single or twin-screw extruder, blender, kneader, Banbury mixer to give a resin composition. Or, part of the materials may be mixed in a melt-mixer and the rest of the materials may then be added and further melt-mixed until uniform.

The compositions of the invention may be formed into articles using any known melt-processing means such as injection molding, blow molding, extrusion, or thermoforming Articles molded using injection molding are most preferred

As demonstrated by the examples (see below) when compared to prior art polyamide resin compositions (CE1-4 and CE7), molded articles made of the polyamide resin compositions disclosed herein (E1-E4) exhibit both good surface appearance and low flammability. In addition, the molded articles made of the polyamide composition resin composition disclosed herein also posses good gloss retention after being exposed to high temperature and high humidity conditions As used here, "good surface appearance" refers to those molded articles having no visible marks due to the addition of various fillers, such as glass fibers; "low flammability' refers to those molded articles having a UL-94 flammability rating (Underwriters Laboratory) of V-0; and "molded articles having good gloss retention after being exposed to high temperature and high humidity conditions" refers to those molded articles having no gloss loss after being conditioned at 60°C and 90% relative humidity for 24 hours Due to such properties, the polyamide resin compositions disclosed herein may be suitable as housing materials for various portable electronic devices, such as mobile telephones, personal digital assistants laptop computers tablet computers, global positioning system receivers, portable games radios, cameras and camera accessories. Therefore, further disclosed herein are molded articles (such as housing parts for various portable electronic devices) comprising the polyamide resin compositions described above

The invention will become better understood upon having reference to the following examples of the invention together with the descriptions of preparation and testing techniques and materials used

### EXAMPLES

### Compounding

The polymeric compositions shown in Table 1 were prepared by compounding in a 26 mm ZSK twin screw extruder All ingredients were blended together and added to the rear of the extruder except that glass fibers and flame retardant were side-fed into a downstream barrel Barrel temperatures were set at about 300-330°C After exiting the extruder the blended compositions were cooled and cut into pellets The pellets were surface coated with 0.2 weight percent of calcium montanate

### Testing methods

Tensile strength and tensile elongation were determined using the ISO 527-1/2 standard method.

Flexural modulus was determined using the ISO178-1/2 standard method.

Notched charpy impact strength was measured using the ISO 179/1eA standard method

Gloss retention was determined with regard to the surface gloss of an ISO plate (60mm X 60mm, 2mm thickness) conditioned at 60"C and 90% relative humidity for 24 hours No optically visible gloss loss was rated as "δ; optically visible gloss loss was rate as X"

UL-94 flammability rating (Underwriters Laboratory) was determined using 0 8 mm thick test bars Prior to the testing, the bars were conditioned at 23°C and 50% relative humidity for 48 hrs or at 70°C for in an air oven for 168 hours

Surface appearance was determined with regard to the surface quality of a flow spiral with 10 mm width and 2 mm thickness, Poor surface quality with optically visible white markings at the end part of a flow spiral was rated as "X"; good surface quality with no optically visible white markings over the whole spiral length was rated as "δ.

Molded articles for the determination of tensile strength. tensile elongation, flexural modulus, notched chary impact strength, gloss retention and flammability were produced on a Sumitomo 100T injection molding machine, wherein the cylinder temperatures were set at 295-310°C, the molding temperature was set at 90°C Flow spirals for the determination of surface appearance were produced on a Sumitomo 180T injection molding machine, wherein the cylinder temperatures were set at 295-310°C, the molding temperature was set at 90°C, the injection pressure was set at 80 MPa, and cooling time was set at 6-8 seconds

### Materials

- PA6T/66 - Zytel® HTN 502 HF NC010 (polyamide 6,T/6,6), available from E.I. du Pont de Nemours;
- PA6I/6T - Zytel® HTN 503 NC010 (polyamide 6,I/6,T), available from E.I. du Pont de Nemours;
- PA66 - Zytel® EFE1117 NC010 (polyamide 66), available from E I du Pont de Nemours,
- Flame retardant - Exolit^{™} OP 1230, an aluminum diethylphosphinate available from Clariant;
- Glass fiber - Nittobo CSG 3PA-820S available from Nittobo Co., Ltd. having a elliptical non-circular cross section. The ratio of the length of the major axis to that of the minor access is 4.
- 2,6-NDA - 2,6-napthalene dicarboxylic acid. available from BP Amoco Chemical Company;
- DDDA - dodecanedioic acid, available from Invista
- Zinc borate - Firebrake^{™} ZB, a zinc borate of the formula (ZnO)₂(B₂O₃)₃(H₂O)_{3.5}, available from US Borax;
- Boehmite - Celasule BMT-33, available from Kawai Sekkai Kogyo
- Colorant concentrate - PAM(F) 25420 Black, available from Daini Seika Co., Ltd.

### Example E1-E4 and Comparative Examples CE1-CE7

In E1-E4 and CE1-CE7, various polyamide resin compositions (with their components listed in Table 1) were prepared using the compounding process described above. The polyamide resin compositions were then subject to various property testing (as described above), and the results are also tabulated in Table 1.

In general, to be useful as housing materials, the composition need to have a Flexural Modulus of 15 GPa or higher and a Notched Charpy impact strength of 11 kJ/m² or higher. As illustrated in Table 1, molded articles made of the polyamide compositions of E1-E4 (the polyamide resin compositions disclosed here) have met these requirements. In addition, when compared to CE1-CE4 and CE7, the molded articles made of the polyamide resin compositions of E1-E4 exhibit both good gloss retention and good surface appearance, while maintaining low flammability. In addition, as demonstrated by CE5 and CE6, when the aliphatic polyamide component is present at 30 wt% or less in the polyamide resin, the surface appearance of the molded article made therefrom becomes very poor and therefore not desirable for the intended end use.

**Table 1**

| | E1 | E2 | E3 | E4 | C1 | CE2 | CE3 | CE4 | CE5 | CE6 | CE7 |
|---|---|---|---|---|---|---|---|---|---|---|---|
| PA6T/68* | 34 | 34 | 68 | 103 | 34.4 | - | 22.1 | 29.4 | 159 | 24.1 | - |
| PA6I/6T* | 103 | 137 | 10.3 | 68 | - | - | 14.7 | 74 | 6.3 | 69 | 10.3 |
| PA66* | 20.5 | 171 | 17.1 | 17.1 | - | 355 | - | - | 95 | 34 | 23.9 |
| Blend Ratio ((PA6T/66)/(PA6I/6 T)/(PA66}) | 10/30/60 | 10/40/50 | 20/30/50 | 30/20/50 | 100/0/0 | 0/0/100 | 60/40/0 | 80/20/0 | 50/20/30 | 70/20/10 | 0/30/70 |
| Flame retardant* | 13 | 13 | 13 | 13 | 11 | 13 | 9 | 9 | 14 | 11 | 13 |
| Glass fiber* | 50 | 50 | 50 | 50 | 50 | 50 | 50 | 50 | 50 | 50 | 50 |
| 2,6-NDA* | 0.5 | 05 | 0.5 | 05 | 07 | 0.5 | 07 | 07 | 07 | 0.7 | - |
| DDDA* | - | - | - | - | - | - | - | - | - | - | 05 |
| Zinc borate* | 03 | 0.3 | 0.3 | 03 | 0.1 | - | - | - | 0.3 | 0 1 | 03 |
| Boehmite* | 1 | 1 | 1 | 1 | 18 | - | 15 | 1.5 | 2.3 | 1.8 | 1 |
| Color concentrate* | 1 | 1 | 1 | 1 | 1 | 1 | 2 | 2 | 1 | 2 | 1 |

| Properties | | | | | | | | | | | |
|---|---|---|---|---|---|---|---|---|---|---|---|
| Tensile strength (MPa) | 184 | 186 | 178 | 169 | 123 | 200 | N/A** | N/A** | 145 | 155 | 166 |
| Tensile Elongation (%) | 15 | 1.6 | 1.4 | 1.4 | 0.9 | 1.8 | N/A** | N/A** | 1.2 | 1.2 | 13 |
| Flexural Modulus (GPa) | 179 | 17.8 | 182 | 172 | N/A** | 178 | N/A** | N/A** | 163 | 16.4 | 184 |
| Notched Charpy impact strength (kJ/m²) | 12.4 | 12.6 | 12.6 | 11 8 | 12.2 | 11.4 | N/A** | N/A** | 100 | 12 | 12.7 |
| Gloss retention | ○ | ○ | ○ | ○ | ○ | X | X | X | ○ | X | ○ |
| UL-94 flammability rating | V-0 | V-0 | V-0 | V-0 | V-0 | V-1 | N/A** | N/A** | V-1 | V-0 | V-1 |
| Surface appearance | ○ | ○ | ○ | ○ | X | ○ | ○ | X | X | X | ○ |

| | | | | | | | | | | | |
|---|---|---|---|---|---|---|---|---|---|---|---|
| *The amount of each component listed under each polyamide resin composition is recorded as wt% based on the total weight of the polyamide resin composition. **N/A means test was not done for the sample | | | | | | | | | | | |

## Claims

1. A polyamide resin composition comprising a polyamide resin, at least one flame retardant, and at least one reinforcing agent, wherein,
a) the polyamide resin comprises at least one aliphatic polyamide and an aromatic polyamide blend comprising at least one semi-crystalline semi aromatic polyamide and at least one amorphous semi-aromatic polyamide;
b) based on the total weight of the polyamide resin, 35 to 70 wt% of the at least one aliphatic polyamide and 30 to 65 wt% of the aromatic polyamide blend are present in the polyamide resin; and
c) based on the total weight of the aromatic polyamide blend, 15 to 80 wt% of the at least one semi-crystalline semi-aromatic polyamide and 20 to 85 wt% of the at least one amorphous semi-aromatic polyamide are present in the aromatic polyamide blend.

2. The polyamide resin composition of Claim 1, wherein,
a) based on the total weight of the polyamide resin, 40 to 70 wt%, or preferably 45 to 65 wt% of the at least one aliphatic polyamide and 30 to 60 wt%, or preferably 35 to 55 wt% of the aromatic polyamide blend are present in the polyamide resin; and
b) based on the total weight of the aromatic polyamide blend, 20 to 70 wt%, or preferably 20 to 60 wt% of the at least one semi-crystalline semi-aromatic polyamide and 30 to 80 wt%, or preferably 40 to 80 wt% of the at least one amorphous semi-aromatic polyamide are present in the aromatic polyamide blend.

3. The polyamide resin composition of Claim 1, wherein (i) the at least one aliphatic polyamide is selected from the group consisting of polyamide 6; polyamide 6,6; polyamide 4,6; polyamide 6,10; polyamide 6,12; polyamide 11; polyamide 12; polyamide 9,10; polyamide 9,12; polyamide 9,13; polyamide 9,14; polyamide 9,15; polyamide 6,16; polyamide 9,36; polyamide 10,10; polyamide 10,12; polyamide 10,13; polyamide 10,14; polyamide 12,10; polyamide 12,12; polyamide 12,13; polyamide 12,14; polyamide 6,14; polyamide 6,13; polyamide 6,15; polyamide 6,16; polyamide 6,13; and combinations of two or more thereof, (ii) the at least one semi-crystalline semi-aromatic polyamide is selected from the group consisting of polyamide MXD,6; polyamide 12,T; polyamide 10,T; polyamide 9,T; polyamide 6,T/6,6; polyamide 6,T/6,I; polyamide 6,T/D,T; polyamide 6,6/6,T/6,I; polyamide 6/6,T; and combinations of two or more thereof, and (iii) the at least one amorphous semi-aromatic polyamide is selected from the group consisting of polyamide 6,I/6,T; polyamide 6,I; polyamide MXD,I/6,I; polyamide MXD,I/MXD,T/6,I/6,T; polyamide MXD,I/12,I; polyamide MXD,I; polyamide MACM,I/12; polyamide MACM,I/MACM,T/12; polyamide 6,I/MACM,I/12; polyamide 6,I/6,T/MACM,I/MACM,T; polyamide 6,I/6,T/MACM,I/MACM,T/12; polyamide MACM,I/MACM,12; and combinations of two or more thereof.

4. The polyamide resin composition of Claim 3, wherein the at least one aliphatic polyamide comprises polyamide 6,6; the at least one semi-crystalline semi-aromatic polyamide comprises polyamide 6,T/6,6; and the at least one amorphous semi-aromatic polyamide comprises polyamide 6,I/6,T.

5. The polyamide resin composition of any of Claims 1-4, wherein the at least one flame retardant is present in the polyamide resin composition at a level of 5 to 45 wt% relative to the weight of the polyamide resin.

6. The polyamide resin composition of Claim 5, wherein the at least one flame retardant comprises at least one selected from the group consisting of phosphinates of the formula (I), diphosphinates of the formula (II), and combinations or polymers thereof, 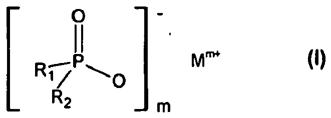 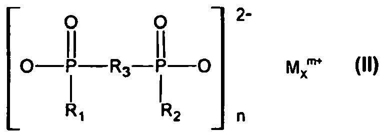 wherein R₁ and R₂ are identical or different and each of R₁ and R₂ is a linear or branched C₁ -C₆ alkyl group or an aryl; R₃ is a linear or branched C₁-C₁₀ alkylene group, a C₆-C₁₀ arylene group, an alkyl-arylene group, or an aryl-alkylene group; M is selected from the group consisting of calcium ions, magnesium ions, aluminum ions, zinc ions, and combinations of two or more thereof; m is an integer of 2 or 3; n is an integer of 1 or 3; and x is an integer of 1 or 2.

7. The polyamide resin composition of Claim 6, wherein the at least one flame retardant may further comprise one or more selected from the group consisting of condensation products of melamine, reaction products of melamine with phosphoric acid, reaction products of condensation products of melamine with phosphoric acid, and combinations of two or more thereof.

8. The polyamide resin composition of any of Claims 1-7, wherein the at least one reinforcing agent is present in the polyamide resin composition at a level of 20 to 60 wt%, based on the total weight of the polyamide resin composition.

9. The polyamide resin composition of any of the Claims 1-8, wherein the polyamide resin composition further comprises one or more other additives selected from the group consisting of flame retardant synergists, zinc borate, impact modifiers, ultraviolet light stabilizers, heat stabilizers, antioxidants, flow enhancers, processing aids, lubricants, colorants, and combinations of two or more thereof.

10. A molded article comprising the polyamide resin composition of any of Claims 1-9.

11. The molded article of Claim 10, which is a housing part for a portable electronic device.

12. The molded article of Claim 11, wherein the portable electronic device is selected from the group consisting of mobile telephones, personal digital assistants, laptop computers, tablet computers, global positioning system receivers, portable games, radios, and cameras and camera accessories.

## Patentansprüche

1. Polyamidharzzusammensetzung umfassend ein Polyamidharz, mindestens ein Flammschutzmittel und mindestens ein Verstärkungsmittel, wobei
a) das Polyamidharz mindestens ein aliphatisches Polyamid und eine aromatische Polyamidmischung umfasst, die mindestens ein halbkristallines halbaromatisches Polyamid und mindestens ein amorphes halbaromatisches Polyamid umfasst;
b) auf das Gesamtgewicht des Polyamidharzes bezogen, 35 bis 70 Gew.-% des mindestens einen aliphatischen Polyamids und 30 bis 65 Gew.-% der aromatischen Polyamidmischung in dem Polyamidharz vorliegen; und
c) auf das Gesamtgewicht der aromatischen Polyamidmischung bezogen, 15 bis 80 Gew.-% des mindestens einen halbkristallinen halbaromatischen Polyamids und 20 bis 85 Gew.-% des mindestens einen amorphen halbaromatischen Polyamids in der aromatischen Polyamidmischung vorliegen.

2. Polyamidharzzusammensetzung nach Anspruch 1, wobei
a) auf das Gesamtgewicht des Polyamidharzes bezogen, 40 bis 70 Gew.-% oder bevorzugt 45 bis 65 Gew.-% des mindestens einen aliphatischen Polyamids und 30 bis 60 Gew.-% oder bevorzugt 35 bis 55 Gew.-% der aromatischen Polyamidmischung in dem Polyamidharz vorliegen; und
b) auf das Gesamtgewicht der aromatischen Polyamidmischung bezogen, 20 bis 70 Gew.-% oder bevorzugt 20 bis 60 Gew.-% des mindestens einen halbkristallinen halbaromatischen Polyamids und 30 bis 80 Gew.-% oder bevorzugt 40 bis 80 Gew.-% des mindestens einen amorphen halbaromatischen Polyamids in der aromatischen Polyamidmischung vorliegen.

3. Polyamidharzzusammensetzung nach Anspruch 1, wobei (i) das mindestens eine aliphatische Polyamid aus der Gruppe ausgewählt ist bestehend aus Polyamid 6; Polyamid 6,6; Polyamid 4,6; Polyamid 6,10; Polyamid 6,12; Polyamid 11; Polyamid 12; Polyamid 9,10; Polyamid 9,12; Polyamid 9,13; Polyamid 9,14; Polyamid 9,15; Polyamid 6,16; Polyamid 9,36; Polyamid 10,10; Polyamid 10,12; Polyamid 10,13; Polyamid 10,14; Polyamid 12,10; Polyamid 12,12; Polyamid 12,13; Polyamid 12,14; Polyamid 6,14; Polyamid 6,13; Polyamid 6,15; Polyamid 6,16; Polyamid 6,13; und Kombinationen von zwei oder mehreren davon, (ii) das mindestens eine halbkristalline halbaromatische Polyamid aus der Gruppe ausgewählt ist bestehend aus Polyamid MXD,6; Polyamid 12,T; Polyamid 10,T; Polyamid 9,T; Polyamid 6,T/6,6; Polyamid 6,T/6,I; Polyamid 6,T/D,T; Polyamid 6,6/6,T/6,I; Polyamid 6/6,T; und Kombinationen von zwei oder mehreren davon und (iii) das mindestens eine amorphe halbaromatische Polyamid aus der Gruppe ausgewählt ist bestehend aus Polyamid 6,I/6,T; Polyamid 6,1; Polyamid MXD,I/6,I; Polyamid MXD,I/MXD,T/6,I/6,T; Polyamid MXD,1/12,1; Polyamid MXD,I; Polyamid MACM,I/12; Polyamid MACM,I/MACM,T/12, Polyamid 6,I/MACM,I/12; Polyamid 6,1/6,T/MACM,1/MACM,T; Polyamid 6,I/6,T/MACM,I/MACM,T/12; Polyamid MACM,I/MACM,12; und Kombinationen von zwei oder mehreren davon.

4. Polyamidharzzusammensetzung nach Anspruch 3, wobei das mindestens eine aliphatische Polyamid Polyamid 6,6 umfasst; das mindestens eine halbkristalline halbaromatische Polyamid Polyamid 6,T/6,6 umfasst; und das mindestens eine amorphe halbaromatische Polyamid Polyamid 6,1/6,T umfasst.

5. Polyamidharzzusammensetzung nach einem der Ansprüche 1 - 4, wobei das mindestens eine Flammschutzmittel in der Polyamidharzzusammensetzung in einem Niveau von 5 bis 45 Gew.-%, auf das Gewicht des Polyamidharzes bezogen, vorliegt.

6. Polyamidharzzusammensetzung nach Anspruch 5, wobei das mindestens eine Flammschutzmittel mindestens eines umfasst ausgewählt aus der Gruppe bestehend aus Phosphinaten der Formel (I), Diphosphinaten der Formel (II) und Kombinationen oder Polymeren davon 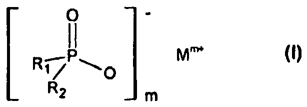 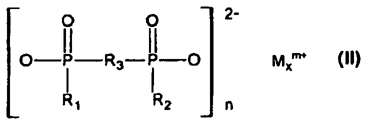 wobei R₁ und R₂ identisch oder verschieden sind und jedes von R₁ und R₂ eine lineare oder verzweigte C₁-C₆-Alkylgruppe oder ein Aryl ist; R₃ eine lineare oder verzweigte C₁-C₁₀-Alkylengruppe, eine C₆-C₁₀-Arylengruppe, eine Alkyl-Arylengruppe oder eine Aryl-Alkylengruppe ist; M aus der Gruppe ausgewählt ist bestehend aus Calciumionen, Magnesiumionen, Aluminiumionen, Zinkionen und Kombinationen von zwei oder mehreren davon; m eine ganze Zahl von 2 oder 3 ist; n eine ganze Zahl von 1 oder 3 ist; und x eine ganze Zahl von 1 oder 2 ist.

7. Polyamidharzzusammensetzung nach Anspruch 6, wobei mindestens eine Flammschutzmittel des Weiteren eines oder mehrere umfassen kann ausgewählt aus der Gruppe bestehend aus Kondensationsprodukten von Melamin, Reaktionsprodukten von Melamin mit Phosphorsäure, Reaktionsprodukten von Kondensationsprodukten von Melamin mit Phosphorsäure und Kombinationen von zwei oder mehreren davon.

8. Polyamidharzzusammensetzung nach einem der Ansprüche 1-7, wobei das mindestens eine Verstärkungsmittel in der Polyamidharzzusammensetzung in einem Niveau von 20 bis 60 Gew.-%, auf das Gesamtgewicht der Polyamidharzzusammensetzung bezogen, vorliegt.

9. Polyamidharzzusammensetzung nach einem der Ansprüche 1 - 8, wobei die Polyamidharzzusammensetzung des Weiteren ein oder mehrere andere Zusatzmittel umfasst ausgewählt aus der Gruppe bestehend aus Flammschutzmittelsynergisten, Zinkborat, Schlagzähigkeitsverbesserern, Ultraviolettlichtstabilisatoren, Wärmestabilisatoren. Antioxidationsmitteln, Verlaufverbesserern, Verarbeitungshilfsmitteln, Gleitmitteln, Farbmitteln und Kombinationen von zwei oder mehreren davon.

10. Geformter Artikel umfassend die Polyamidharzzusammensetzung nach einem der Ansprüche 1 - 9.

11. Geformter Artikel nach Anspruch 10, der ein Gehäuseteil für ein tragbares elektronisches Gerät ist.

12. Geformter Artikel nach Anspruch 11, wobei das tragbare elektronische Gerät aus der Gruppe ausgewählt ist bestehend aus Handys, persönlichen digitalen Assistenten, Laptop-Computern, Tablet-Computern, Satellitennavigationssystemen, portablen Spielen, Radios und Photoapparaten und Photoapparatzubehör.

## Revendications

1. Composition de résine de polyamide comprenant une résine de polyamide, au moins un agent ignifuge, et au moins un agent de renfort, dans laquelle
a) la résine de polyamide comprend au moins un polyamide aliphatique et un mélange de polyamides aromatiques comprenant au moins un polyamide semi-aromatique semi-cristallin et au moins un polyamide semi-aromatique amorphe;
b) sur la base du poids total de la résine de polyamide, 35 à 70 % en pds du au moins un polyamide aliphatique et 30 à 65 % en pds du mélange de polyamides aromatiques sont présents dans la résine de polyamide; et
c) sur la base du poids total du mélange de polyamides aromatiques, 15 à 80 % en pds du au moins un polyamide semi-aromatique semi-cristallin et 20 à 85 % en pds du au moins un polyamide semi-aromatique amorphe sont présents dans le mélange de polyamides aromatiques.

2. Composition de résine de polyamide selon la revendication 1, dans laquelle
a) sur la base du poids total de la résine de polyamide, 40 à 70 % en pds, ou de préférence 45 à 65 % en pds du au moins un polyamide aliphatique et 30 à 60 % en pds, ou de préférence 35 à 55 % en pds du mélange de polyamides aromatiques sont présents dans la résine de polyamide; et
b) sur la base du poids total du mélange de polyamides aromatiques, 20 à 70 % en pds, ou de préférence 20 à 60 % en pds du au moins un polyamide semi-aromatique semi-cristallin et 30 à 80 % en pds, ou de préférence 40 à 80 % en pds du au moins un polyamide semi-aromatique amorphe sont présents dans le mélange de polyamides aromatiques.

3. Composition de résine de polyamide selon la revendication 1, dans laquelle (i) le au moins un polyamide aliphatique est sélectionné parmi le groupe constitué du polyamide 6; du polyamide 6,6; du polyamide 4,6; du polyamide 6,10; du polyamide 6,12; du polyamide 11; du polyamide 12; du polyamide 9,10; du polyamide 9,12; du polyamide 9,13; du polyamide 9,14; du polyamide 9,15; du polyamide 6,16; du polyamide 9,36; du polyamide 10,10; du polyamide 10,12; du polyamide 10,13; du polyamide 10,14; du polyamide 12,10; du polyamide 12,12; du polyamide 12,13; du polyamide 12,14; du polyamide 6,14; du polyamide 6,13; du polyamide 6,15; du polyamide 6,16; du polyamide 6,13; et des combinaisons de deux ou plusieurs d'entre eux, (ii) le au moins un polyamide semi-aromatique semi-cristallin est sélectionné parmi le groupe constitué du polyamide MXD,6; du polyamide 12,T; du polyamide 10,T; du polyamide 9,T; du polyamide 6,T/6,6; du polyamide 6,T/6,I; du polyamide 6,T/D,T; du polyamide 6,6/6,T/6,I; du polyamide 6/6,T; et des combinaisons de deux ou plusieurs d'entre eux, et (iii) le au moins un polyamide semi-aromatique amorphe est sélectionné parmi le groupe constitué du polyamide 6,I/6,T; du polyamide 6,I; du polyamide MXD,I/6,I; du polyamide MXD,I/MXD,T/6,I/6,T; du polyamide MXD,I/12,I; du polyamide MXD,I; du polyamide MACM,I/12; du polyamide MACM,I/MACM,T/12; du polyamide 6,I/MACM,I/12; du polyamide 6,I/6,T/MACM,I/MACM,T; du polyamide 6,I/6,T/MACM,I/MACM,T/12; du polyamide MACM,I/MACM,12; et des combinaisons de deux ou plusieurs d'entre eux.

4. Composition de résine de polyamide selon la revendication 3, dans laquelle le au moins un polyamide aliphatique comprend le polyamide 6,6; le au moins un polyamide semi-aromatique semi-cristallin comprend le polyamide 6,T/6,6; et le au moins un polyamide semi-aromatique amorphe comprend le polyamide 6,I/6,T.

5. Composition de résine de polyamide selon l'une quelconque des revendications 1 à 4, dans laquelle le au moins un agent ignifuge est présent dans la composition de résine de polyamide à une teneur de 5 à 45 % en pds par rapport au poids de la résine de polyamide.

6. Composition de résine de polyamide selon la revendication 5, dans laquelle le au moins un agent ignifuge comprend au moins l'un sélectionné parmi le groupe constitué des phosphinates de formule (I), des diphosphinates de formule (II), et des combinaisons ou des polymères de ceux-ci, 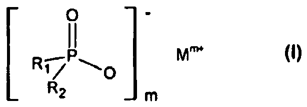 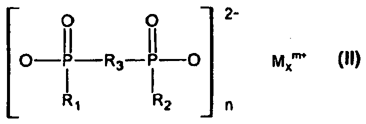 dans lesquelles R₁ et R₂ sont identiques ou différents et chacun de R₁ et R₂ est un groupe alkyle en C₁ à C₆ linéaire ou ramifié ou un aryle; R₃ est un groupe alkylène en C₁ à C₁₀ linéaire ou ramifié, un groupe arylène en C₆ à C₁₀, un groupe alkyl-arylène, ou un groupe aryl-alkylène; M est sélectionné parmi le groupe constitué des ions calcium, des ions magnésium, des ions aluminium, des ions zinc, et des combinaisons de deux ou plusieurs d'entre eux; m est un nombre entier d'une valeur de 2 ou 3; n est un nombre entier d'une valeur de 1 ou 3; et x est un nombre entier d'une valeur de 1 ou 2.

7. Composition de résine de polyamide selon la revendication 6, dans laquelle le au moins un agent ignifuge peut en outre comprendre un ou plusieurs agent(s) sélectionné(s) parmi le groupe constitué des produits de condensation de la mélamine, des produits réactionnels de la mélamine avec l'acide phosphorique, des produits réactionnels des produits de condensation de la mélamine avec l'acide phosphorique, et des combinaisons de deux ou plusieurs d'entre eux.

8. Composition de résine de polyamide selon l'une quelconque des revendications 1 à 7, dans laquelle le au moins un agent de renfort est présent dans la composition de résine de polyamide à une teneur de 20 à 60 % en pds, sur la base du poids total de la composition de résine de polyamide.

9. Composition de résine de polyamide selon l'une quelconque des revendications 1 à 8, dans laquelle la composition de résine de polyamide comprend en outre un ou plusieurs autre(s) additif(s) sélectionné(s) parmi le groupe constitué des agents ignifuges agissant en synergie, du borate de zinc, des agents de modification de la résistance aux chocs, des agents de stabilisation de la lumière ultraviolette, des agents de stabilisation thermique, des agents antioxydants, des agents d'amélioration de l'écoulement, des auxiliaires de transformation, des lubrifiants, des colorants, et des combinaisons de deux ou plusieurs d'entre eux.

10. Article moulé comprenant la composition de résine de polyamide selon l'une quelconque des revendications 1 à 9.

11. Article moulé selon la revendication 10, qui est une pièce formant boîtier pour un appareil électronique portable.

12. Article moulé selon la revendication 11, dans lequel l'appareil électronique portable est sélectionné parmi le groupe constitué des téléphones portables, des assistants électroniques individuels, des ordinateurs portables, des tablettes électroniques, des récepteurs du système mondial de localisation, des jeux portables, des radios, et des appareils photographiques et accessoires pour appareil photographique.
